# EUROPÄISCHE PATENTSCHRIFT

(11) **EP 2 867 534 B1**
(45) Veröffentlichungstag und Bekanntmachung des Hinweises auf die Patenterteilung: **13.03.2019**
(21) Anmeldenummer: 13723516.4
(22) Anmeldetag: 21.05.2013
(51) Int. Cl.: F04D 25/04, F02B 37/02, F02C 6/12, F04D 29/42, F04D 29/44, F04D 29/62, F01D 25/24, F02B 39/00

(54) **ABGASTURBOLADER**
EXHAUST GAS TURBOCHARGER
TURBOCOMPRESSEUR À GAZ D'ÉCHAPPEMENT

(30) Priorität: 29.06.2012 DE 102012211375
(43) Veröffentlichungstag der Anmeldung: 06.05.2015
(73) Patentinhaber: Bayerische Motoren Werke Aktiengesellschaft, 80809 München (DE)
(72) Erfinder: VELTHUIS, Jan, 86899 Landsberg (DE)
(86) Internationale Anmeldenummer: PCT/EP2013/060376
(87) Internationale Veröffentlichungsnummer: WO 2014/000976

(56) Entgegenhaltungen:
- EP-A1- 0 006 311
- EP-A1- 1 672 181
- WO-A2-2011/084283
- DE-A1- 4 312 078
- DE-A1-102009 053 237
- JP-A- 2008 208 732

## Beschreibung

Die Erfindung betrifft einen Abgasturbolader gemäß dem Oberbegriff des Patentanspruchs 1.

Abgasturbolader kommen beispielsweise in Kraftfahrzeugen mit Brennkraftmaschinen vermehrt zum Einsatz und ermöglichen eine Leistungssteigerung, die unter anderem für eine Reduzierung eines Kraftstoffverbrauchs des Fahrzeugs genutzt werden kann.

Derartige Abgasturbolader umfassen in der Regel ein separates Verdichtergehäuse und ein separates Turbinengehäuse, in welchen jeweils ein Laufrad (Verdichterlaufrad bzw. Turbinenlaufrad) angeordnet ist. Jedes Gehäuse weist eine Verbindungsstelle zum direkten Verbinden mit dem jeweils anderen Gehäuse oder zum Verbinden mit einem zwischen beiden Gehäusen angeordneten Lagerstuhl auf, wobei die Verbindungsstellen jeweils einen Durchbruch zum Einsetzen der Bauteile des Abgasturboladers in das jeweilige Gehäuse umfassen. Der Lagerstuhl ist zur drehbaren Lagerung einer Laufradwelle ausgestaltet, welche die beiden Laufräder trägt und drehfest miteinander koppelt.

Die beiden Gehäuse können beispielsweise als Radialverdichter- bzw. Radialturbinengehäuse ausgestaltet sein und weisen hierzu eine komplexe und feingliedrige Formgebung mit einem oder mehreren spiral- bzw. schneckenförmigen Strömungskanälen auf, so dass ihre Herstellung eine besondere Herausforderung darstellt.

Üblicherweise werden die Gehäuse mittels bekannter Metallgussverfahren unter Verwendung von Gusskernen zur Formgebung eines hiervon umschlossenen Gehäuseinnenraums hergestellt. Die komplexe und feingliedrige Formgebung der bisher bekannten Gehäuse bewirkt jedoch, dass eine Negativform zum Gießen dieser Form nur schwer mit Gusskernen abgebildet werden kann. So treten beispielsweise lokal sehr geringe Materialstärken der Gusskerne auf, wodurch insbesondere in diesen Bereichen eine erhöhte Bruchgefahr für die Gusskerne besteht. Verstärkt wird die Bruchgefahr durch ein bisheriges Bestreben die Gehäuseöffnungen und Durchbrüche, insbesondere den Durchbruch im Bereich der Verbindungsstelle zum Verbinden mit dem Lagerstuhl bzw. dem jeweils anderen Gehäuse möglichst klein zu halten, so dass ein Einsetzen des Laufrades und ggf. anderer Bauteile des Abgasturboladers durch diesen Durchbruch gerade noch möglich bleibt.

Neben den beschriebenen Schwierigkeiten des Herstellungsvorgangs als solchem hat die Herstellung mittels Metallgussverfahren darüber hinaus zur Folge, dass das erzeugte Gussteil verfahrensbedingt großen Fertigungstoleranzen hinsichtlich seiner Abmessungen unterworfen ist. Zwar können diese durch eine Nachbearbeitung teilweise ausgeglichen werden, doch ist insbesondere eine Nachbearbeitung aufgrund der komplexen und feingliedrigen Formgebung und des hieraus resultierenden engen und schwer zugänglichen Gehäuseinnenraums nur eingeschränkt durchführbar. Insbesondere wird hierdurch eine Zugänglichkeit für entsprechendes Werkzeug zur schnellen und einfachen Nachbearbeitung erschwert oder sogar verhindert.

Dies hat zur Folge, dass speziell im Gehäuseinnenraum hohe Fertigungstoleranzen des Gehäuses nur schwer ausgeglichen werden können. Um also beispielsweise für das jeweilige Laufrad dennoch stets eine ausreichende Lauffreiheit und einen Mindestwert für ein Spaltmaß zwischen Laufrad und Innenwandung des Gehäuseinnenraumes bereitstellen zu können, muss das Spaltmaß pauschal entsprechend größer gewählt werden, so dass ein Einsatz auch im Fall von ungünstigen Toleranzwerten des Gehäuses möglich bleibt.

Dies steht im Widerspruch zu einem grundsätzlichen Bestreben aufgrund strömungsmechanischer und thermodynamischer Gesichtspunkte ein möglichst geringes Spaltmaß zwischen der Gehäusewandung und dem Laufrad zur Erzielung eines möglichst hohen Wirkungsgrades vorzusehen. Es bleibt momentan daher nur die Möglichkeit aufgrund der beschriebenen hohen Toleranzabweichungen der gegossenen Gehäuse vergleichsweise große Spaltmaße zwischen Laufrad und Gehäusewandung bereitzustellen und einen entsprechend reduzierten Wirkungsgrad hinzunehmen.

Die hohen Fertigungstoleranzen der gegossenen Gehäuse führen außerdem zu einer vergleichsweise ungenauen axialen Positionierung des Laufrades bezüglich eines im Gehäuse integrierten Strömungskanals. Die unmittelbare Folge einer ungenauen Relativposition ist eine negative Beeinflussung der Strömungsverhältnisse im Gehäuseinneren und damit einhergehend eine weitere Reduzierung des Wirkungsgrades des gesamten Abgasturboladers.

Die DE 43 12 078 A1 und die EP1 672 181 A1 offenbaren jeweils einen Abgasturbolader für eine Brennkraftmaschine mit einem zwischen einem Lagergehäuse und einem Turbinenlaufrad angeordneten Abschirmelement.

WO 2011/084283 A2, DE 10 2009 053 237 A1 und JP 2008 208732 A zeigen jeweils einen Abgasturbolader ohne Schutzvorrichtung der Lageranordnung vor thermischer Belastung des heißen Abgases, welches die Turbine antreibt.

Aufgabe der Erfindung ist es daher, einen Abgasturbolader bereitzustellen, welcher die beschriebenen Nachteile zumindest reduziert und insbesondere eine einfachere und möglichst exakte Herstellung bzw. Montage sowie einen verbesserten Wirkungsgrad ermöglicht.

Diese Aufgabe wird gelöst mittels eines Abgasturboladers mit den Merkmalen des Patentanspruchs 1. Vorteilhafte Ausgestaltungsformen ergeben sich aus den abhängigen Ansprüchen.

Demnach wird ein Abgasturbolader für eine Brennkraftmaschine bereitgestellt, mit
- einem Gehäuse und einem von dem Gehäuse zumindest teilweise umschlossenen Gehäuseinnenraum,
- einem in dem Gehäuseinnenraum angeordneten Laufrad, welches mit einer Laufradwelle drehbar in einem Lagerstuhl gelagert ist,
wobei das Gehäuse mindestens einen Strömungskanal zum Zu- oder Abführen eines Fluid zu bzw. von dem Laufrad umfasst, und ein Zwischenelement zwischen Laufrad und Lagerstuhl koaxial zur Laufradwelle angeordnet ist und mindestens abschnittsweise eine Wandung bildet, die zur mindestens abschnittsweisen Begrenzung mindestens eines der Strömungskanäle ausgestaltet ist.

Der Abgasturbolader umfasst also ein Zwischenelement, das vorzugsweise als separates Bauteil ausgeführt und in eingebauten Zustand zwischen Laufrad und Lagerstuhl angeordnet ist. Das Zwischenelement kann hierzu unmittelbar und koaxial mit der Laufradwelle drehbeweglich verbunden sein, wobei das Zwischenelement stationär zu dem Gehäuse angeordnet und die Laufradwelle drehbeweglich zu dem Zwischenelement ist. Insbesondere kann das Zwischenelement koaxial zu dieser an dem Lagerstuhl befestigt sein.

Außerdem ist das Zwischenelement derart ausgebildet, dass es mit einem oder mehreren Abschnitten eine Wandung für einen Teil des Strömungskanals bildet. Mit anderen Worten wird der Strömungskanal zumindest auf der einer Strömung zugewandten Seite in einem ersten Abschnitt von dem Gehäuse selbst und in einem zweiten Abschnitt von dem Zwischenelement begrenzt. Es versteht sich, dass das Zwischenelement ebenso eine Vielzahl von Wandungen für einen oder mehrere Strömungskanäle bilden kann.

Dies bietet den Vorteil, dass das Gehäuse nicht zur vollständigen Bildung des Strömungskanals ausgestaltet sein muss, sondern beispielsweise in jenen Bereichen ausgespart werden kann, in welchen statt dessen das Zwischenelement für die Begrenzung des Strömungskanals vorgesehen ist. Erst durch Zusammenfügen beider Bauteile wird somit der Strömungskanal vollständig ausgebildet.

Die hierdurch ermöglichte großzügigere Aussparung des Gehäuses erlaubt bei geeigneter Anordnung eine verbesserte Zugänglichkeit des Gehäuseinnenraums, so dass der Zugang für Werkzeuge und somit eine Nachbearbeitung des Gehäuses erleichtert wird. Es wird also möglich, eine exakte Formgebung der Innenwandung des Gehäuses bzw. des Gehäuseinnenraums im Nachgang zu einem Gussvorgang vorzunehmen. Auf diese Weise können sogar enge Toleranzwerte im Gehäuseinnenraum erzielt und somit eine optimierte Geometrie des Abgasturboladers erreicht werden. Beispielsweise ist es auf diese Weise erleichtert, ein Spaltmaß zwischen Laufrad und Innenwandung exakt auf einen strömungs- und thermodynamisch optimalen Wert abzustimmen, wodurch ein Wirkungsgrad des Abgasturboladers zusätzlich gesteigert werden kann.

Eine derartige großzügigere Aussparung des Gehäuses bietet darüber hinaus den Vorteil thermomechanische Spannungen in einer Wandung des Gehäuses zumindest zu reduzieren. Thermodynamische Spannungen treten beispielsweise bei starker lokaler Erwärmung des Gehäuses zwischen Bereichen unterschiedlichen Erwärmungsgrades auf. Die Folge sind üblicherweise Spannungsrisse, die zum Ausfall des jeweiligen Bauteils, hier also des Abgasturboladers, führen würden. Während kleine Gehäuseöffnungen dem Gehäuse eine hohe Biegesteifigkeit verleihen, bewirkt die beschriebene größere Aussparung des Gehäuses eine gewisse Weichheit bzw. Nachgiebigkeit des Gehäuses, die es ermöglicht temperaturbedingte und lokal variierende Ausdehnungen (in gewissem Umfang) auszugleichen und somit die thermomechanischen Spannungen bzw. die hieraus resultierenden Spannungsrisse zu verringern.

Gemäß einer Ausführungsform weist das Zwischenelement einen im Wesentlichen radial zu der Laufradwelle erstreckten scheibenförmigen Fortsatz auf, wobei der scheibenförmige Fortsatz die den mindestens einen Strömungskanal zumindest abschnittsweise begrenzende Wandung bildet. Dieser ist vorzugsweise derart ausgestaltet, dass der Fortsatz in eine entsprechende Ausnehmung in dem Gehäuse einsetzbar ist und, wie voranstehend beschrieben, im eingesetzten Zustand zumindest abschnittsweise die Wandung des einen oder der mehreren Strömungskanäle definiert.

Außerdem kann der scheibenförmige Fortsatz einen Außendurchmesser aufweisen, der größer als ein Außendurchmesser des Laufrades ist. Je nach Größe des Durchmessers kann somit entsprechend eine entsprechend größere Aussparung des Gehäuses vorgesehen werden, die mit zunehmender Größe einen verbesserten Zugang ins Innere des Gehäuses eröffnet.

Des Weiteren kann der scheibenförmige Fortsatz einen Außendurchmesser aufweisen, der größer als ein Innendurchmesser einer Trennwand eines Strömungskanals ist. Als Trennwand im Sinne dieser Erfindung sind eine seitliche Wandung eines einzelnen Strömungskanals sowie eine Zwischenwand zur Abtrennung zweier benachbarter Strömungskanäle zu verstehen. Als Innendurchmesser der Trennwand ist insbesondere der zweifache radiale Abstand zwischen einer Rotationsachse der Laufradwelle und eines der Laufradwelle zugewandten Randes (Zunge) der Trennwand zu verstehen. Ist der scheibenförmige Fortsatz größer als der Innendurchmesser der Trennwand, so bedeutet dies, dass im unverbauten Zustand die Trennwand zumindest im Bereich dieses Randes in vorteilhafter Weise für eine Nachbearbeitung leicht zugänglich ist.

Beispielsweise kann der mindestens eine Strömungskanal jeweils eine Spiralform aufweisen und in einer im Wesentlichen radial zu der Laufradwelle orientierten Ebene ausgerichtet sein, so dass das Gehäuse als Radialverdichter- oder als Radialturbinengehäuse ausgebildet ist.

Entsprechend einer weiteren Ausführungsform ist das Zwischenelement zu einer radialen und/oder axialen Positionierung und/oder Abstützung des Lagerstuhls ausgebildet. Beispielsweise ist das Gehäuse derart ausgestaltet, dass dieses den scheibenförmigen Fortsatz des Zwischenelements in einer komplementär ausgeführten Ausnehmung passgenau aufnehmen kann, um dieses in radialer Richtung zu positionieren und zu stützen. Hierbei kann das Zwischenelement beispielsweise an dem Lagerstuhl befestigt sein, insbesondere mittels einer Form- und/oder Kraftschlüssigen Verbindung. Möglich ist ebenso eine (gegebenenfalls zusätzliche) stoffschlüssige Verbindung.

Das Zwischenelement kann außerdem einen axialen Anschlag zum axialen Fixieren des Zwischenelements relativ zu dem Gehäuse umfassen. Auf diese Weise wird einerseits eine exakte Positionierung des Zwischenelementes in der axialen Richtung festgelegt werden. Andererseits werden außerdem die mit dem Zwischenelement unmittelbar oder zumindest mittelbar in Verbindung stehenden Bauteile entsprechend eindeutig und reproduzierbar positioniert, wie beispielsweise das Laufrad gegenüber dem Strömungskanal und/oder einer Innenwandung des Gehäuses.

Außerdem kann das Zwischenelement als im Wesentlichen topfförmiges Adapterelement zum axialen Einsetzen in den Gehäuseinnenraum des Gehäuses ausgestaltet sein, wobei das Zwischenelement in eingesetztem Zustand zumindest mit dem scheibenförmigen Fortsatz bündig, insbesondere flächenbündig, mit einer Wandung eines Strömungskanals des Gehäuses abschließt. Das Adapterelement ist hierbei mit einem umlaufenden und abgewinkelten Kragenförmigen Randabschnitt versehen, welcher als Anschlag dient.

Beispielsweise kann der scheibenförmige Fortsatz außerdem umfangseitig eine Dichtung, insbesondere einen in Umfangsrichtung umlaufenden Dichtring, zum Abdichten des Zwischenelements gegenüber dem Gehäuse umfassen. Es wird somit eine fluiddichte Abtrennung zwischen dem Laufrad und dem auf der gegenüberliegenden Seite des Zwischenelements angeordneten Lagerstuhls geschaffen. Insbesondere kann ein Durchtritt von heißen Abgasen aus dem Bereich des Laufrades in Richtung des Lagerstuhls verhindert werden. Vorzugsweise kann die Dichtung in einer entsprechenden Ausnehmung des Zwischenelements, insbesondere in einer umlaufende Nut in dem scheibenförmigen Fortsatz oder in einer entsprechenden Aussparung des Gehäuses angeordnet sein.

Vorzugsweise ist das Laufrad ein Turbinenrad oder ein Verdichterrad.

Die Erfindung wird nachfolgend unter Bezugnahme auf die Zeichnungen anhand eines Ausführungsbeispiels näher erläutert. Es zeigen:
Fig. 1: eine Turbinenanordnung für einen Abgasturbolader gemäß dem Stand der Technik,
Fig. 2: eine Turbinenanordnung für einen Abgasturbolader gemäß der Beschreibung,
Fig. 3: eine Detailansicht eines Zwischenelements der Turbinenanordnung aus Fig. 2,
Fig. 4: eine perspektivische Schnittansicht der in Fig. 2 dargestellten Turbinenanordnung.

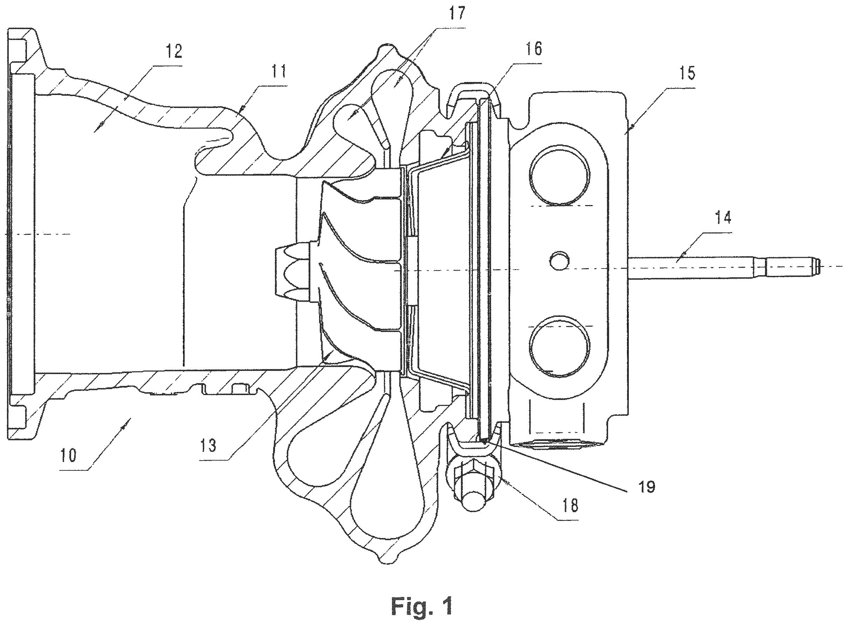

Fig. 1 zeigt eine Turbinenanordnung 10 für einen Abgasturbolader gemäß dem Stand der Technik. Der Abgasturbolader bzw. die dargestellte Turbinenanordnung 10 umfasst ein Gehäuse 11 und einen von dem Gehäuse 11 zumindest teilweise umschlossenen Gehäuseinnenraum 12. In dem Gehäuseinnenraum 12 ist ein Turbinenlaufrad 13 angeordnet, welches mit einer Laufradwelle 14 drehbar in einem Lagerstuhl 15 gelagert ist. Außerdem umfasst das Gehäuse 11 zwei Strömungskanäle 17 zum Zuführen eines Abgasstroms zu dem Turbinenlaufrad 13, um dieses in Rotationsbewegung zu versetzen. Zwischen Laufrad 13 und Lagerstuhl 15 ist ein Abschirmelement 16 angeordnet. Das Abschirmelement 16 ist blechförmig ausgestaltet und schirmt den Lagerstuhl 15 gegenüber einer thermischen Beaufschlagung aus Richtung des Turbinenlaufrades 13 bzw. der Strömungskanäle 17 ab. Das Gehäuse 11 ist in der dargestellten Ausführungsform über eine Flanschverbindung 19 sowie mittels einer diese Flanschverbindung 19 umgreifenden Schelle 18 mit dem Lagerstuhl 15 verbunden.

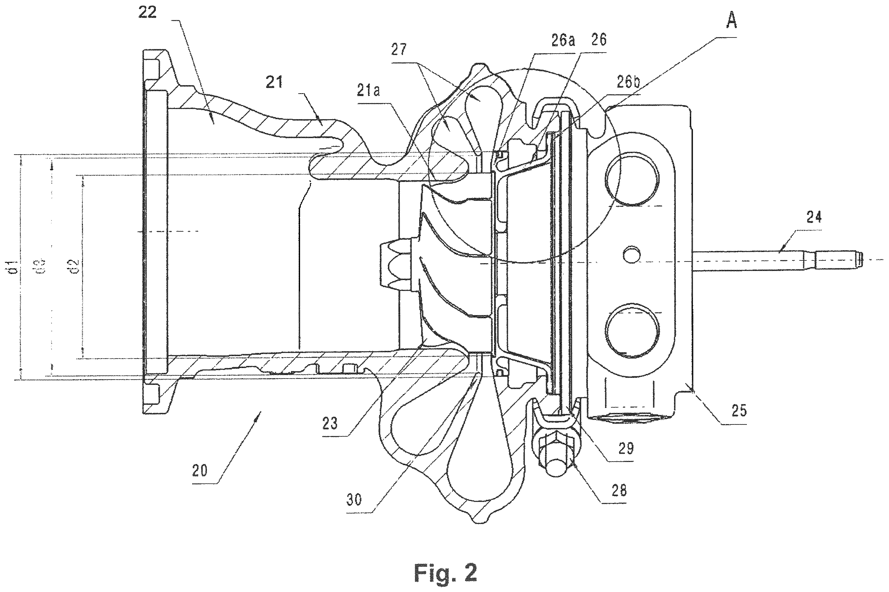

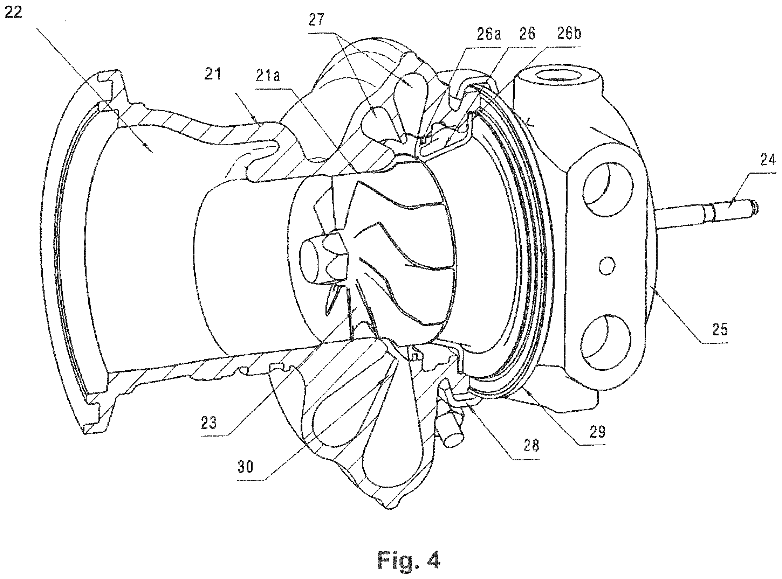

Fig. 2 und Fig. 4 zeigen eine Turbinenanordnung 20 für einen Abgasturbolader einer Brennkraftmaschine mit einem Gehäuse 21 und einem von dem Gehäuse 21 zumindest teilweise umschlossenen Gehäuseinnenraum 22 in seitlicher bzw. perspektivischer Schnittansicht. In dem Gehäuseinnenraum 22 ist ein Turbinenlaufrad 23 angeordnet, welches mit einer Laufradwelle 24 drehbar in einem Lagerstuhl 25 gelagert ist. Außerdem umfasst das Gehäuse 21 zwei Strömungskanäle 27 zum Zuführen eines Abgasstroms zu dem Turbinenlaufrad 23, um dieses in Rotationsbewegung zu versetzen. Das Gehäuse 21 ist in der dargestellten Ausführungsform über eine Flanschverbindung 29 sowie mittels einer diese Flanschverbindung 29 umgreifenden Schelle 28 mit dem Lagerstuhl 25 verbunden. Selbstverständlich sind ebenso andere Verbindungsmittel und -methoden, insbesondere andere kraft- und/oder formschlüssige aber auch stoffschlüssige Verbindungen möglich.

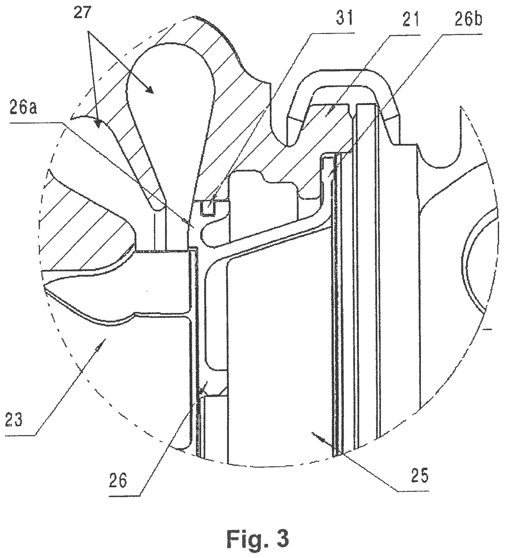

Zwischen dem Laufrad 23 und dem Lagerstuhl 25 ist ein Zwischenelement 26 angeordnet. Das Zwischenelement 26 ist in Fig. 3 im Detail dargestellt und derart ausgestaltet, dass dieses abschnittsweise eine Wandung bildet, die zur abschnittsweisen Begrenzung eines der beiden Strömungskanäle 27 dient. Hierzu weist das Zwischenelement 26 einen im Wesentlichen radial zu der Laufradwelle 24 erstreckten scheibenförmigen Fortsatz 26a auf, wobei der scheibenförmige Fortsatz 26a die den Strömungskanal 27 abschnittsweise begrenzende Wandung bildet. Zusätzlich wirkt das Zwischenelement 26 als Abschirmelement zum Schutz des Lagerstuhls 25.

Der scheibenförmige Fortsatz 26a ist derart ausgestaltet, dass dieser einen Außendurchmesser d1 aufweist, der größer als ein Außendurchmesser d2 des Turbinenlaufrades 23 ist. Dies bietet den Vorteil, dass das Gehäuse 21 im Bereich der Flanschverbindung und im Bereich der Strömungskanäle 27 einen größeren Durchbruch aufweisen kann, als dies gemäß dem Stand der Technik (vgl. Fig. 1) möglich ist. Statt des Gehäuses 21 übernimmt im Bereich dieses Durchbruchs bzw. der entsprechenden Aussparung das Zwischenelement 26 die Aufgabe einer Begrenzung des Strömungskanals 27.

Es kann somit in unverbautem Zustand die Innenwandung des Gehäuses insbesondere in einem dem Laufrad zugewandten Bereich 21a auf besonders einfache Art und Weise mittels geeignetem Werkzeug erreicht und nachbearbeitet werden, so dass entsprechend enge Toleranzvorgaben beispielsweise für ein Spaltmaß zwischen Laufrad und Innenwandung eingehalten werden können.

Außerdem ist der Außendurchmesser d1 des scheibenförmigen Fortsatzes 26a ebenfalls größer als ein Innendurchmesser d3 einer Trennwand 30 eines Strömungskanals 27. Diese Trennwand 30 ist in der dargestellten Ausführungsform als Trennwand 30 zwischen den beiden benachbarten Strömungskanälen 27 angeordnet. Diese Ausgestaltung ermöglicht zusätzlich eine besonders einfache Zugänglichkeit einer der Laufradwelle zugewandten Spitze der Trennwand, so dass dieses ebenfalls mittels geeignetem Werkzeug an entsprechende Toleranzvorgaben angepasst und auf diese Weise strömungs- und thermodynamische Aspekte für einen möglichst optimalen Wirkungsgrad des Abgasturboladers berücksichtigt werden können.

Die beiden Strömungskanäle 27 weisen jeweils eine Spiralform auf und sind in einer im Wesentlichen radial zu der Laufradwelle 24 orientierten Ebene (senkrecht zur Bildebene) ausgerichtet.

Das Zwischenelement26 ist zusätzlich zu einer radialen und axialen Positionierung und Abstützung des Lagerstuhls 25 ausgebildet. Hierzu stützt sich das Zwischenelement 26 in radialer Richtung mittels des scheibenförmigen Fortsatzes 26a gegenüber dem Gehäuse 21 ab.

Für eine axiale Positionierung des Zwischenelements 26 dient beispielsweise ein axialer Anschlag 26b. Zusätzlich ist der axiale Anschlag 26b aufgrund seiner flanschförmigen Ausgestaltung und einer formschlüssigen Anordnung im Bereich der Flanschverbindung 29 axial bezüglich des Gehäuses 21 fixiert.

Mit anderen Worten ist das Zwischenelement als topfförmiges Adapterelement zum axialen Einsetzen in Richtung der Laufradwelle 24 in den Gehäuseinnenraum des Gehäuses ausgestaltet, wobei das Zwischenelement in eingesetztem Zustand zumindest mit dem scheibenförmigen Fortsatz bündig, insbesondere flächenbündig, mit einer Wandung eines Strömungskanals des Gehäuses abschließt. Zusätzlich ist das Zwischenelement mit einem Rand des "Topfes" an dem Gehäuse axial fixiert, wie voranstehend bereits beschrieben.

Lediglich optional kann der scheibenförmige Fortsatz 26a umfangseitig eine Dichtung, beispielsweise in Form eines in Umfangsrichtung umlaufenden Dichtrings 31, zum Abdichten des Zwischenelements gegenüber dem Gehäuse 21 umfassen. Die Dichtung kann hierzu in eine ebenfalls in Umfangrichtung umlaufende Nut des scheibenförmigen Fortsatzes 26 eingesetzt sein.

Es versteht sich, dass das Laufrad statt des dargestellten Turbinenlaufrades ebenso als ein Verdichterlaufrad mit entsprechender Umkehrung einer Strömungsrichtung zum Verdichten von Ansaugluft ausgebildet sein kann.

## Patentansprüche

1. Abgasturbolader für eine Brennkraftmaschine mit
- einem Gehäuse (21) und einem von dem Gehäuse (21) zumindest teilweise umschlossenen Gehäuseinnenraum (22),
- einem in dem Gehäuseinnenraum (22) angeordneten Laufrad (23), welches mit einer Laufradwelle (24) drehbar in einem Lagerstuhl (25) gelagert ist,
wobei das Gehäuse (21) mindestens einen Strömungskanal (27) zum Zu- oder Abführen eines Fluid zu bzw. von dem Laufrad (23) umfasst, wobei ein Zwischenelement (26) zwischen Laufrad (23) und Lagerstuhl (25) koaxial zur Laufradwelle (24) angeordnet ist und mindestens abschnittsweise eine Wandung bildet, die zur mindestens abschnittsweisen Begrenzung mindestens eines der Strömungskanäle (27) ausgestaltet ist, wobei das Laufrad (23) ein Turbinenrad ist, und das Zwischenelement (26) ein Abschirmelement zum Schutz des Lagerstuhls (25) bildet, das zwischen Laufrad (23) und Lagerstuhl (25) angeordnet ist, wobei das Zwischenelement (26) einen im Wesentlichen radial zu der Laufradwelle erstreckten scheibenförmigen Fortsatz (26a) aufweist, **dadurch gekennzeichnet, dass** der scheibenförmige Fortsatz (26a) die den mindestens einen Strömungskanal (27) zumindest abschnittsweise begrenzende Wandung bildet, und der scheibenförmige Fortsatz (26a) einen Außendurchmesser (d1) aufweist, der größer als ein Außendurchmesser (d2) des Laufrades ist, und wobei der scheibenförmige Fortsatz (26a) umfangseitig eine Dichtung (31), insbesondere einen in Umfangsrichtung umlaufenden Dichtring, zum Abdichten des Zwischenelements (26) gegenüber dem Gehäuse (21) umfasst.

2. Abgasturbolader nach Anspruch 1, **dadurch gekennzeichnet, dass** der scheibenförmige Fortsatz (26a) einen Außendurchmesser (d1) aufweist, der größer als ein Innendurchmesser (d3) einer Trennwand (30) eines Strömungskanals (27) ist.

3. Abgasturbolader nach einem der Ansprüche 1 bis 2, **dadurch gekennzeichnet, dass** der mindestens eine Strömungskanal (27) jeweils eine Spiralform aufweist und in einer im Wesentlichen radial zu der Laufradwelle (24) orientierten Ebene ausgerichtet ist.

4. Abgasturbolader nach einem der Ansprüche 1 bis 3, **dadurch gekennzeichnet, dass** das Zwischenelement (26) zu einer radialen und/oder axialen Positionierung und/oder Abstützung des Lagerstuhls (25) ausgebildet ist.

5. Abgasturbolader nach einem der Ansprüche 1 bis 4, **dadurch gekennzeichnet, dass** das Zwischenelement (26) einen axialen Anschlag (26b) zum axialen Fixieren des Zwischenelements (26) relativ zu dem Gehäuse (21) umfasst.

6. Abgasturbolader nach einem der Ansprüche 1 bis 5, **dadurch gekennzeichnet, dass** das Zwischenelement (26) als topfförmiges Adapterelement zum axialen Einsetzen in den Gehäuseinnenraum des Gehäuses (21) ausgestaltet ist, wobei das Zwischenelement (26) in eingesetztem Zustand zumindest mit dem scheibenförmigen Fortsatz (26a) bündig mit einer Wandung eines Strömungskanals (27) des Gehäuses (21) abschließt.

## Claims

1. An exhaust gas turbocharger for an internal combustion engine, with
- a housing (21), and a housing interior (22) which is at least partially enclosed by the housing (21),
- an impeller (23) arranged in the housing interior (22), which is mounted rotatably in a bearing block (25) with an impeller shaft (24),
wherein the housing (21) comprises at least one flow channel (27) for supplying or discharging a fluid to or from the impeller (23), wherein an intermediate element (26) between the impeller (23) and bearing block (25) is arranged coaxially to the impeller shaft (24) and at least in portions forms a wall which is configured, at least in portions, to delimit at least one of the flow channels (27), wherein the impeller (23) is a turbine impeller, and the intermediate element (26) forms a shielding element for protecting the bearing block (25), which element is arranged between the impeller (23) and bearing block (25),
wherein the intermediate element (26) has a disc-shaped extension (26a) extended substantially radially to the impeller shaft,
**characterised in that**
the disc-shaped extension (26a) forms the wall which delimits the at least one flow channel (27) at least in portions, and the disc-shaped extension (26a) has an external diameter (d1) which is greater than an external diameter (d2) of the impeller, and the disc-shaped extension (26a) comprising on its periphery a seal (31), especially a sealing ring which runs in the peripheral direction, for sealing off the intermediate element (26) from the housing (21).

2. An exhaust gas turbocharger according to Claim 1, **characterised in that** the disc-shaped extension (26a) has an external diameter (d1) which is greater than an internal diameter (d3) of a partition (30) of a flow channel (27).

3. An exhaust gas turbocharger according to one of Claims 1 to 2, **characterised in that** the at least one flow channel (27) has in each case a spiral shape and is oriented in a plane oriented substantially radially to the impeller shaft (24).

4. An exhaust gas turbocharger according to one of Claims 1 to 3, **characterised in that** the intermediate element (26) is designed for radial and/or axial positioning and/or supporting of the bearing block (25).

5. An exhaust gas turbocharger according to one of Claims 1 to 4, **characterised in that** the intermediate element (26) comprises an axial stop (26b) for axially fixing the intermediate element (26) relative to the housing (21).

6. An exhaust gas turbocharger according to one of Claims 1 to 5, **characterised in that** the intermediate element (26) is configured as a pot-shaped adapter element for axial insertion into the housing interior of the housing (21), the intermediate element (26) in an inserted state at least with the disc-shaped extension (26a) terminating flush with a wall of a flow channel (27) of the housing (21).

## Revendications

1. Turbo compresseur de gaz d'échappement destiné à un moteur à combustion interne comprenant :
- un carter (21) et une chambre interne de capteur (22) entourée au moins partiellement par le carter (21),
- une roue à aubes (23) installée dans la chambre interne (22) du carter et montée mobile en rotation dans une selle d'appui (25) avec un arbre de roue à aubes (24),
le carter (21) comprenant au moins un canal de circulation (27) permettant l'introduction ou l'évacuation d'un fluide vers ou à partir de la roue à aubes (23),
un élément intermédiaire (26) étant monté co-axialement à l'arbre de la roue à aubes (24) entre cette roue à aubes (23) et la selle d'appui (25), et formant au moins par segment une paroi qui est réalisée pour limiter au moins par segment au moins l'un des canaux de circulation (27), la roue à aubes (23) étant une roue de turbine et l'élément intermédiaire (26) étant un élément de protection de la selle d'appui (25) installé entre la roue à aubes (23) et cette selle d'appui (25),
l'élément intermédiaire (26) comprenant un prolongement (26a) en forme de disque s'étendant essentiellement radialement à l'arbre de la roue à aubes,
**caractérisé en ce que**
le prolongement en forme de disque (26a) forme la paroi limitant au moins par segment le canal de circulation (27) et a un diamètre externe (d1) qui est supérieur au diamètre externe (d2) de la roue à aubes, le prolongement en forme de disque (26a) comportant du côté de sa périphérie une garniture d'étanchéité (31), en particulier une bague d'étanchéité s'étendant en direction périphérique pour permettre de garantir l'étanchéité de l'élément intermédiaire (26) par rapport au carter (21).

2. Turbo compresseur de gaz d'échappement conforme à la revendication 1,
**caractérisé en ce que**
le prolongement en forme de disque (26a) a un diamètre externe (d1) qui est supérieur au diamètre interne (d3) d'une paroi de séparation (30) d'un canal de circulation (27).

3. Turbo compresseur de gaz d'échappement conforme à l'une des revendications 1 et 2,
**caractérisé en ce que**
le canal de circulation (27) est en forme de spirale et est dirigé dans un plan essentiellement orienté radialement à l'arbre (24) de la roue à aubes.

4. Turbo compresseur de gaz d'échappement conforme à l'une des revendications 1 à 3,
**caractérisé en ce que**
l'élément intermédiaire (26) est réalisé pour permettre le positionnement radial et/ou axial et/ou le support de la selle d'appui (25).

5. Turbo compresseur de gaz d'échappement conforme à l'une des revendications 1 à 4,
**caractérisé en ce que**
l'élément intermédiaire (26) comporte une butée axiale (26b) permettant la fixation axiale de l'élément intermédiaire (26) par rapport au carter (21).

6. Turbo compresseur de gaz d'échappement conforme à l'une des revendications 1 à 5,
**caractérisé en ce que**
l'élément intermédiaire (26) est réalisé sous la forme d'un élément adaptateur en forme de pot pour permettre son insertion axiale dans la chambre interne du carter (21), à l'état inséré, l'élément intermédiaire (26) étant au moins avec le prolongement en forme de disque (26a) à fleur avec une paroi d'un canal de circulation (27) du carter (21).
